# FASCICULE DE BREVET EUROPEEN

(11) **EP 3 333 540 B1**
(45) Date de publication et mention de la délivrance du brevet: **13.05.2020**
(21) Numéro de dépôt: 17203450.6
(22) Date de dépôt: 24.11.2017
(51) Int. Cl.: G01C 13/00

(54) **PROCÉDÉ ET SYSTÈME D'ACQUISITION DE DONNÉES D'ANALYSE DANS UNE ZONE D'OBSERVATION D'UN ENVIRONNEMENT SUBAQUATIQUE**
VERFAHREN UND SYSTEM ZUR ERFASSUNG VON ANALYSEDATEN IN EINER BEOBACHTUNGSZONE EINER UNTERWASSERUMGEBUNG
METHOD AND SYSTEM FOR ACQUIRING ANALYSIS DATA IN AN OBSERVATION AREA OF AN UNDERWATER ENVIRONMENT

(30) Priorité: 09.12.2016 FR 1662208
(43) Date de publication de la demande: 13.06.2018
(73) Titulaire: KOPADIA, 91400 Orsay (FR)
(72) Inventeur: RICHER DE FORGES, Hervé, 91400 Orsay (FR); DESRUES, Karine, 91400 Orsay (FR)
(74) Mandataire: Berton, Anthony Christian Jacques

(56) Documents cités:
- WO-A1-2012/129612
- US-A1- 2014 300 885
- US-A1- 2015 370 252
- AGUIARY A ET AL: "Cooperative Autonomous Marine Vehicle motion control in the scope of the EU GREX Project: Theory and Practice", OCEANS 2009-EUROPE, 2009. OCEANS '09, IEEE, PISCATAWAY, NJ, USA, 11 mai 2009 (2009-05-11), pages 1-10, XP031540695, ISBN: 978-1-4244-2522-8

## Description

La présente invention concerne de manière générale la surveillance d'un environnement subaquatique (mers, océans, lacs, étangs, rivières), et plus précisément un procédé et un système permettant d'acquérir des données d'analyse dans une zone d'observation d'un environnement subaquatique.

La connaissance du milieu sous-marin est encore de nos jours largement insuffisante pour des raisons très diverses liées à l'hostilité du milieu et à sa difficulté d'accès (profondeur, courants marins, houle...), à certaines propriétés du milieu (turbidité, perméabilité magnétique, luminosité...) rendant certaines mesures difficiles, et aux coûts nécessaires pour développer des équipements et des systèmes d'acquisition de données et pour mener des missions d'exploration.

Les mers et océans recouvrent plus de 70% de la surface de la terre, et on estime à seulement 5% les zones explorées par l'homme, la plupart étant situées le long des côtes. Les zones non explorées sont néanmoins potentiellement riches tant sur le plan biologique que sur le plan d'éventuelles ressources exploitables.

Parallèlement, l'impact de l'homme en termes notamment d'épuisement des ressources, de destruction des habitats ou de pollution, sur tout milieu naturel, qu'il soit terrestre ou subaquatique, est devenu un sujet de préoccupation majeure à l'échelle mondiale, auquel il est important de pouvoir répondre par des solutions permettant de surveiller à divers degrés des zones de tailles également très diverses.

Dans le domaine particulier de la cartographie des habitats sous-marins, donné ici à titre d'exemple non limitatif, les systèmes connus jusqu'ici peuvent être regroupés en trois grandes familles :
- les systèmes de vision avec une approche multi spectrale (rayon X, Infrarouge, ultraviolet), utilisant des équipements aériens (avions, véhicules autonomes aériens, satellites) pour obtenir des images correspondant au fond sous-marin d'une zone d'observation ;
- les systèmes acoustiques (sonars) utilisant des équipements naviguant sur la surface de l'eau, comme par exemple des « poissons remorqués » par un bateau, ou un sonar monté sous la coque d'un bateau ;
- les systèmes portés par des plongeurs, ou des équipements sous-marins, autonomes ou non.

Aucun des systèmes connus ne permet cependant de répondre de manière entièrement satisfaisante aux enjeux d'exploration des zones inconnues ou de surveillance de l'évolution des zones connues.

Ainsi, pour les solutions aériennes, les images prises par satellites peuvent donner des bons résultats, avec une résolution de l'ordre de 2 mètres, pour des eaux claires et peu profondes et de bonnes conditions climatiques, mais ne sont pas exploitables pour des profondeurs supérieures à 20 mètres. Par ailleurs, la surveillance de l'évolution de l'habitat implique de pouvoir comparer des images prises à des moments qui peuvent être très espacés dans le temps, et nécessite de pouvoir récupérer dans ce cas des images d'archives des satellites. L'utilisation de caméras montées sur des avions ou des équipements volants autonomes est plus flexible et moins coûteuse, mais présente des limitations similaires à l'usage des images satellites en termes de profondeur.

Les solutions acoustiques utilisant un équipement naviguant en surface donnent des résultats satisfaisants tant que la profondeur de la zone observée ne dépasse pas 25 mètres. Les sonars multifaisceaux ou à balayage latéral peuvent être utilisés pour des profondeurs allant jusqu'à 100 mètres, mais les mesures sont alors peu précises.

Les solutions connues nécessitant des plongeurs ou des équipements sous-marins ne permettent pas de couvrir des zones de vaste étendue. A titre d'exemple, le document publié par A. Aguiar et al et intitulé "Coopérative Autonomous Marine Vehicle Motion Control in the scope of the EU GREX Project : Theory and Practice " ayant pour référence OCEANS 2009-EUROPE, 2009. OCEANS '09, IEEE, PISCATAWAY, NJ, USA, 11 mai 2009 (2009-05-11), pages 1-10, XP031540695, ISBN : 978-1-4244-2522-8, décrit une mission en deux étapes commençant par une étude rapide d'une zone donnée utilisant une flotte d'AUVs (acronyme anglais pour "Autonomous Underwater Vehicles" signifiant véhicules sous-marins autonomes) équipée de capteurs acoustiques. La carte produite permet l'examen de caractéristiques géologiques (agissant comme indicateurs de la présence de bouches hydrothermales) qui aideront à choisir des zones d'inspection plus petites. Lorsqu'une zone plus petite est trouvée, une flotte de véhicules équipée avec des capteurs de méthane peut être déployée comme décrit sur la figure 2 de ce document. La configuration de base des véhicules est telle que les estimations spatiales du gradient de concentration en méthane peuvent être calculées en coopération. La flotte manœuvre pour rechercher la région de concentration plus élevée, et donc la localisation de la bouche.

La présente invention a notamment pour but de proposer une méthodologie dans la façon d'obtenir des données d'analyse en environnement subaquatique (sous-marin ou en eaux douces) qui soit applicable, à des coûts et des durées raisonnables, pour des zones d'observation de tailles très diverses. La présente invention a également pour but de permettre l'acquisition de données de bonne qualité quelles que soient les propriétés et/ou conditions hostiles du milieu. La présente invention a également pour but de proposer une solution dans l'acquisition des données qui soit aisément transposable à différents domaines d'applications (étude des habitats, recherche de ressources exploitables, analyse de la pollution...).

Pour ce faire, l'invention a pour objet un procédé d'acquisition de données d'analyse dans une zone d'observation d'un environnement subaquatique, selon la revendication 1. Le procédé comprend:
- le déploiement, pour une première mission d'acquisition de premières données d'analyse, d'un premier groupe de véhicules motorisés subaquatiques aptes à évoluer de façon coordonnée dans ladite zone d'observation selon un premier motif de trajectoires à suivre par lesdits véhicules motorisés, chaque véhicule motorisé subaquatique étant équipé d'au moins un capteur dédié à l'acquisition d'un type de données d'analyse, ladite première mission étant définie par un premier ensemble prédéterminé de paramètres de mission comprenant ledit premier motif de trajectoires, au au moins un des paramètres de mission dudit deuxième ensemble étant fonction d'au moins une des premières données d'analyse acquise au cours de la première mission, et lesdites première et deuxième missions sont réalisées de façon concomitante, ledit au moins un des paramètres de mission dudit deuxième ensemble étant ajusté en temps réel en fonction de ladite au moins une des premières données d'analyse acquise.

Selon l'invention, ledit procédé comporte en outre une étape de transmission directe ou indirecte de données d'au moins un véhicule motorisé subaquatique du premier groupe vers au moins un véhicule motorisé subaquatique du deuxième groupe.

Outre les caractéristiques principales qui viennent d'être mentionnées dans le paragraphe précédent, le procédé selon l'invention peut présenter une ou plusieurs caractéristiques complémentaires parmi les suivantes :
- l'étape de transmission peut être indirecte, les données transmises étant relayées par exemple par un équipement de surface ;
- ledit au moins un type de premières données d'analyse à acquérir lors de la première mission peut être différent dudit au moins un type de deuxième données d'analyse à acquérir lors de la deuxième mission ;
- les trajectoires du premier, et/ou respectivement du deuxième, motif de trajectoires sont sensiblement parallèles entre elles ;
- les trajectoires du premier motif de trajectoires peuvent être globalement parallèles aux trajectoires du deuxième motif de trajectoires ;
- en variante, les trajectoires du premier motif de trajectoires sont globalement transverses aux trajectoires du deuxième motif de trajectoires.

L'invention sera mieux comprise à la lecture de la description qui suit, faite en référence aux figures annexées, dans lesquelles :
- la figure 1 illustre un exemple d'architecture d'une portion d'un système d'acquisition conforme à l'invention ;
- la figure 2 illustre une vue latérale d'un exemple d'équipement de surface susceptible d'être utilisé dans un système d'acquisition conforme à l'invention ;
- la figure 3 illustre une vue latérale et une vue de face d'un exemple de véhicule motorisé subaquatique susceptible d'être utilisé dans un système d'acquisition conforme à l'invention ;
- les figures 4(a) et 4(b) illustrent schématiquement le principe d'un exemple de mission globale d'acquisition comportant deux missions d'acquisition successives ;
- la figure 5 représente schématiquement, en vue de dessus, un exemple de motifs de trajectoires dans le cadre de deux missions d'acquisition successives ;
- la figure 6 illustre une vue latérale et une vue de face d'un exemple de véhicule motorisé subaquatique susceptible d'être utilisé dans un système d'acquisition conforme à l'invention ;
- la figure 7 illustre schématiquement le principe d'un exemple de mission globale d'acquisition comportant deux missions d'acquisition concomitantes ;
- la figure 8 représente schématiquement, en vue de dessus, un exemple de motifs de trajectoires dans le cadre de deux missions d'acquisition concomitantes ;
- la figure 9 illustre schématiquement, en vue de côté, un autre exemple de missions concomitantes ;
- la figure 10 résume des étapes susceptibles d'être mises en œuvre pour un procédé d'acquisition de données d'analyse conforme à l'invention, comportant deux missions successives ;
- la figure 11 résume des étapes susceptibles d'être mises en œuvre pour un procédé d'acquisition de données d'analyse conforme à l'invention, comportant deux missions concomitantes.

L'acquisition de données d'analyse dans une zone d'observation d'un environnement subaquatique repose ici de façon générale sur l'utilisation d'une pluralité de véhicules motorisés subaquatiques, que l'on peut configurer et/ou contrôler pour qu'ils évoluent simultanément de façon coordonnée, au sein d'un même groupe, lors d'une mission donnée dans la zone d'observation.

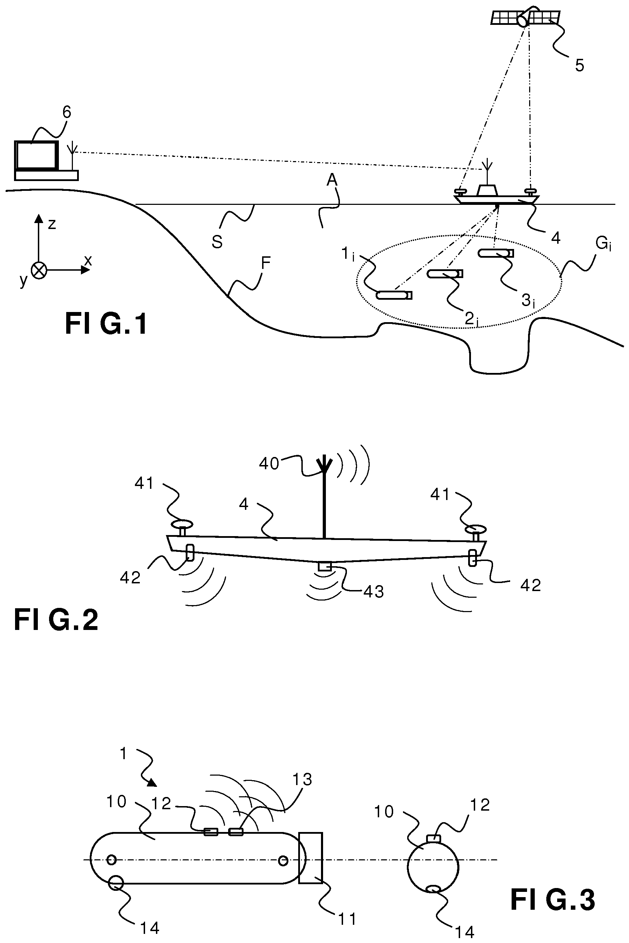

La figure 1 illustre un exemple non limitatif d'un système d'acquisition utilisant, dans le cours d'une mission donnée, trois véhicules motorisés subaquatiques 1ᵢ, 2ᵢ et 3ᵢ évoluant de façon coordonnée au sein d'un groupe Gᵢ, dans une zone A d'observation entre la surface S et le fond F d'un environnement aquatique, par exemple une portion d'océan. L'indice i est ici utilisé pour identifier les véhicules motorisés d'un même groupe Gᵢ, pour des raisons qui deviendront apparentes par la suite. Sur les différentes figures, un repère à trois dimensions d'axes (x, y, z) est utilisé, les axes x et y étant par convention dans un plan parallèle à la surface S, et l'axe z étant représentatif des profondeurs par rapport à la surface S ou des altitudes par rapport au fond F.

Par évolution « de façon coordonnée », on entend un déplacement des différents véhicules subaquatiques dans la zone A d'observation selon un motif de trajectoires, avec par exemple des trajectoires sensiblement parallèles entre elles (déplacement en formation), chaque véhicule occupant des positions différentes, en profondeur selon l'axe z et/ou dans un plan parallèle à la surface S.

Chaque véhicule motorisé subaquatique 1ᵢ, 2ᵢ et 3ᵢ, est doté d'au moins un capteur dédié à l'acquisition d'un type de données d'analyse. Le groupe Gᵢ peut être homogène, en ce sens que les trois véhicules 1ᵢ, 2ᵢ et 3ᵢ sont identiques, ou à tout le moins dotés des mêmes capteurs dédiés à l'acquisition de données d'analyse de mêmes types. En variante, le groupe Gᵢ peut être hétérogène, des premiers véhicules motorisés étant utilisés pour l'acquisition de données d'un premier type, d'autres, voire un sous ensemble des premiers véhicules, pour l'acquisition de données d'un deuxième type.

La mission confiée aux véhicules motorisés du groupe Gᵢ dépend bien entendu de l'application visée, mais est dans tous les cas définie par un ensemble de paramètres de mission comprenant au moins le motif de trajectoires, le ou les types de données d'analyse à acquérir et les paramètres de fonctionnement pour les capteurs des véhicules concernés aptes à acquérir les données correspondant à ce ou ces types de données d'analyse à acquérir.

Au cours de la mission qui leur a été confiée, les véhicules du groupe Gᵢ évoluent dans la zone A d'observation selon les trajectoires du motif, pour chacun effectuer et mémoriser leurs mesures. Un équipement 4 de surface, par exemple un véhicule autonome de surface ou USV (initiales anglo-saxonnes mises pour Unmanned Surface Vehicle), est apte à communiquer, de préférence au travers de signaux acoustiques et/ou optiques, avec un ou plusieurs des véhicules motorisés du groupe Gᵢ, et sert de point de référence pour permettre de connaître la position des véhicules. L'équipement 4 de surface peut déterminer de façon précise sa propre position en utilisant par exemple un système de positionnement par satellite 5.

Une hiérarchie peut être définie à l'intérieur du groupe Gᵢ en utilisant l'un des véhicules comme véhicule maître, les autres véhicules étant alors considérés comme des véhicules esclaves recevant des consignes du véhicule maître. Le groupe Gᵢ définit dans ce cas une meute de véhicules et il est nécessaire de prévoir sur les différents véhicules des moyens de communication inter véhicules, ou à tout le moins entre le véhicule maître et chaque véhicule esclave. Dans ce cas, les informations de positionnement venant de l'équipement 4 de surface peuvent être transmises uniquement au véhicule maître, chaque véhicule esclave étant apte à suivre sa trajectoire soit en calculant sa propre position par rapport aux informations reçues du véhicule maître, soit en obéissant à des consignes transmises par le véhicule maître.

En variante, les véhicules du groupe Gᵢ évoluent en essaim, c'est-à-dire sans hiérarchie particulière. Dans ce cas, les informations de positionnement venant de l'équipement 4 de surface sont transmises de préférence à chacun des véhicules du groupe Gᵢ. Tout ou partie des véhicules peuvent en outre échanger des informations leur permettant de connaître à tout moment leur position relative les uns par rapport aux autres.

Les mesures effectuées par chacun des véhicules du groupe Gᵢ peuvent être agrégées et traitées après la fin de la mission et la récupération hors de l'eau des véhicules du groupe, en récupérant les données mémorisées dans chacun des véhicules. En variante, les mesures peuvent être transmises à l'équipement 4 de surface au cours de la mission, en temps réel ou de façon périodique, puis relayées pour traitement ultérieur à une station 6 de contrôle distante en utilisant tout système de communication sans fil (illustré schématiquement par le lien de communication 7 entre l'équipement 4 de surface et la station 6 de contrôle). Selon la distance séparant l'équipement 4 de surface et la station 6 de contrôle, on optera pour le système de communication le mieux adapté, qui peut être notamment tout système radiofréquence à courte ou longue portée, voire un système cellulaire de communication ou un système de communication par satellites. En variante toujours, les mesures peuvent être transmises à l'équipement 4 de surface au cours de la mission, en temps réel ou de façon périodique, pour traitement en cours de mission. Enfin, en variante ou en combinaison, comme cela deviendra apparent dans la suite, tout ou partie des mesures peut également être transmises sous l'eau par les véhicules.

La figure 2 est une vue agrandie de l'équipement 4 de surface de la figure 1 et la figure 3 illustre schématiquement un exemple de véhicule 1 motorisé subaquatique pouvant faire partie d'un groupe, en vues de côté et de face:

L'équipement 4 de surface comporte dans cet exemple une antenne 40 pour la communication sans fil avec la station 6 de contrôle de la figure 1, ainsi qu'un, voire deux systèmes GPS 41 (par exemple de type DGPS, RGPS, RTK ou PPP) ou équivalent, pour calculer, à l'aide du système de navigation par satellites 5, la position de l'équipement 4 de surface. Sur sa partie inférieure immergée, l'équipement 4 de surface porte également des systèmes 42 de positionnement acoustiques (par exemple de type base longue ou LBL, base courte ou SBL, ou base ultra-courte ou USBL) ou optiques pour le calcul des positions des différents véhicules subaquatiques, et un modem 43 de communication acoustique pour l'échange de données avec les véhicules subaquatiques, telles que les mesures réalisées sous l'eau par ces véhicules subaquatiques. L'équipement 4 de surface pourrait également être un bateau, ou une ou plusieurs bouées réparties en surface, ou tout équipement doté des moyens nécessaires pour connaître sa position en surface et permettre le positionnement précis de chaque véhicule subaquatique, pour échanger des données avec les véhicules subaquatiques, en particulier recevoir les mesures effectuées par ces véhicules, et pour servir de relais si nécessaire entre les véhicules et la station 6 de contrôle.

Le véhicule 1 représenté schématiquement sur figure 3 est un véhicule autonome ou AUV (initiales anglo-saxonnes mises pour Autonomous Underwater Vehicle), comportant un corps 10 et un système de propulsion 11. Le corps 10 renferme différents éléments (non représentés) tels que l'électronique de fonctionnement, un module d'alimentation en énergie, des mémoires pour conserver notamment les paramètres de mission et les mesures effectuées. Le corps porte également, de préférence sur sa partie supérieure, un module 12 pour l'émission et/ou la réception de signaux acoustiques respectivement à destination et/ou en provenance du modem 43 de communication de l'équipement 4 de surface, et un module 13 de communication pour l'échange de données avec les systèmes 42 acoustiques ou optiques de positionnement. Le véhicule 1 est enfin doté d'un capteur 14 dont le type et la position sur le corps dépendent du type de données d'analyse à acquérir. Dans le cas de la figure 3, le capteur 14 est par exemple une caméra placée sur la partie inférieure avant du corps 10, de manière à capturer des images sur le fond de la zone d'observation. Une liste non exhaustive d'autres capteurs susceptibles d'être utilisés selon les applications est donnée ci-après :
- Sonar mono faisceau haute définition, utilisé notamment pour réaliser une classification des habitats ;
- Sonar à balayage latéral, utilisé notamment pour déterminer des zones d'apparence semblable ;
- Spectromètre pour la mesure de radioactivité de sources naturelles ou pour la mesure de la concentration en éléments chimiques déterminés ;
- Magnétomètre pour repérer la présence de corps métalliques naturels (par exemple des nodules polymétalliques) ou non;
- Capteur CTD (initiales anglo-saxonnes mises pour Conductivity Temperature Depth) mesurant la conductivité, la température et la profondeur ;
- Détecteur d'hydrocarbures ;
- Tout capteur apte à donner des informations sur la qualité de l'eau (capteur de lumière, capteur de turbidité, capteur de salinité, pH-mètre...) ;
- Sonde pour le prélèvement d'échantillon ...

Le véhicule 1 peut être un équipement spécifiquement développé pour réaliser toujours les mêmes types de mesures, ou tout équipement standard que l'on peut modifier et/ou adapter rapidement pour effectuer une mission donnée. Un intérêt de l'utilisation de véhicules autonomes réside notamment dans la facilité de déploiement et de récupération de ce type d'équipements à différents endroits. Ces véhicules peuvent en effet être déployés et/ou récupérés indifféremment depuis un bateau ou un bord de mer.

La description ci-dessus a donné jusqu'ici la signification générale de l'utilisation d'un groupe de véhicules subaquatiques, pour une mission donnée, caractérisée par un ensemble de paramètres de mission.

La présente invention va néanmoins plus loin en prévoyant qu'une mission globale d'acquisition de données d'analyse dans une zone A d'observation comporte au moins deux missions, auxquelles on se référera dans la suite comme première mission d'acquisition et deuxième mission d'acquisition, et en conditionnant la deuxième mission à des résultats obtenus au cours de ou suite à la première mission.

Plus précisément, le procédé d'acquisition selon l'invention prévoit :
- d'une part, de déployer un premier groupe G₁ de véhicules motorisés subaquatiques, dans le cadre de la première mission définie par un premier ensemble prédéfini de paramètres de mission qui comporte, comme expliqué précédemment, un premier motif de trajectoires, au moins un type de premières données d'analyse à acquérir, et des paramètres de fonctionnement relatifs aux capteurs du premier groupe aptes à l'acquisition de données correspondant audit au moins un type de premières données d'analyse à acquérir ; et
- d'autre part, de déployer un deuxième groupe G₂ de véhicules motorisés subaquatiques, dans le cadre de la deuxième mission définie par un deuxième ensemble de paramètres de mission qui comporte un deuxième motif de trajectoires, au moins un type de deuxièmes données d'analyse à acquérir, et des paramètres de fonctionnement relatifs aux capteurs du deuxième groupe aptes à l'acquisition de données correspondant audit au moins un type de deuxième données d'analyse à acquérir,
   le deuxième ensemble de paramètres étant en outre conditionné à des résultats obtenus au cours de ou suite à la première mission par le fait qu'au moins un des paramètres de mission du deuxième ensemble est fonction d'au moins une des premières données d'analyse acquise au cours de la première mission.

La première mission et la deuxième mission peuvent être menées soit successivement, soit de façon concomitante, la stratégie adoptée étant fonction de plusieurs critères souvent indépendants les uns des autres tels que la durée maximale allouée à la mission globale, le type de données d'analyse à acquérir pour la première mission qui peut conditionner une durée maximale de validité des mesures effectuées au cours de cette première mission, le coût en équipements nécessaires pour conduire les deux missions...

Bien entendu, une mission globale d'acquisition de données d'analyse peut comporter plus de deux missions, menées successivement et/ou de façon concomitante.

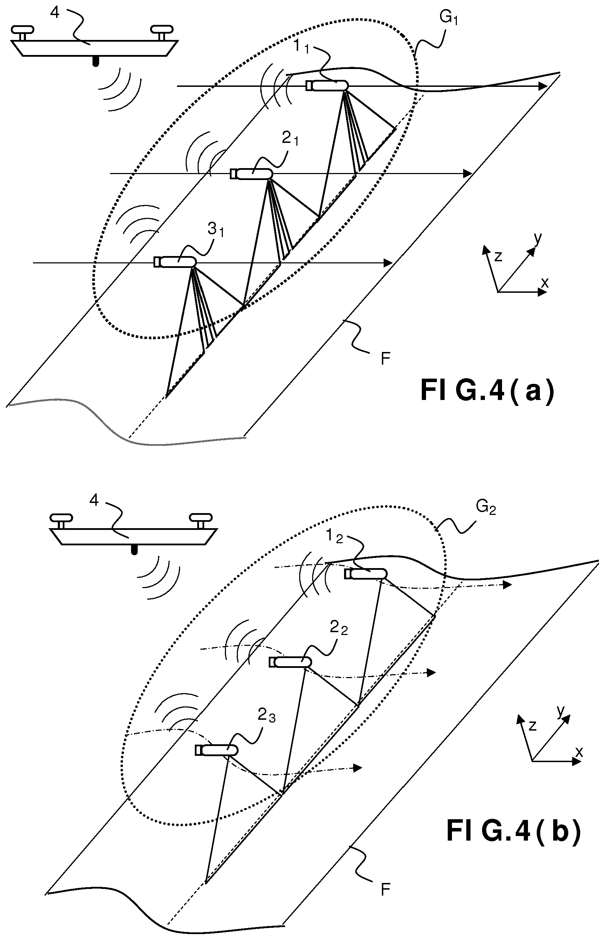

Un exemple de missions successives est illustré schématiquement sur les figures 4(a) et 4(b), dans lesquelles la figure 4(a) montre un premier groupe G₁ de trois véhicules motorisés subaquatiques 1₁, 2₁ et 3₁ qui ont été déployés pour la première mission, et la figure 4(b) montre un deuxième groupe G₂ de trois véhicules motorisés subaquatiques 1₂, 2₂ et 3₂ qui ont été déployés pour la deuxième mission. Cet exemple est particulièrement adapté à la surveillance de l'évolution de l'habitat. Les trois véhicules du premier groupe G₁ se déplacent en formation selon le motif de trajectoires qui leur a été commandé, ici des trajectoires sensiblement parallèles entre elles et à l'axe x (profondeur constante), représentées par des flèches. Les trajectoires ont par exemple été mémorisées au préalable dans chacun des véhicules motorisés subaquatiques 1₁, 2₁ et 3₁, ou bien sont contrôlées par l'équipement 4 de surface. En variante, un seul des trois véhicules, considéré comme maître, connait à l'avance sa trajectoire ou est contrôlé par l'équipement 4 de surface pour suivre sa trajectoire, et contrôle les deux autres véhicules esclaves pour qu'ils puissent se déplacer selon leur trajectoire. On suppose ici, à titre d'exemple non limitatif, que chaque véhicule motorisé subaquatique 1₁, 2₁ et 3₁ est équipé d'un sonar mono faisceau haute définition de classification des habitats, et de deux sonars à balayage latéral, dont seuls les faisceaux ont été schématisés sur la figure 4(a). Les mesures effectuées par l'ensemble des sonars sont, comme indiqué précédemment, soit uniquement mémorisées dans les véhicules, soit transmises pour traitement local au niveau de l'équipement 4 de surface, soit enfin transmises à l'équipement 4 de surface pour être relayées à une station de contrôle distante. La première mission étant terminée, les véhicules peuvent être sortis de l'eau. Le traitement des mesures effectuées lors de cette première mission va permettre d'établir une cartographie de l'habitat dans la zone d'observation, et d'identifier par suite des sous-zones d'intérêt, typiquement des contours estimés de différentes zones d'habitat (algues, sable, roches...), sur lesquelles la deuxième mission va se concentrer.

Plus précisément, la deuxième mission va être définie ici pour capturer des images des sous-zones d'intérêt qui ont été identifiées grâce à la première mission, et ainsi permettre de préciser les limites des sous-zones d'intérêt. Comme visible sur la figure 4(b), les trois véhicules motorisés subaquatiques 1₂, 2₂ et 3₂ formant le deuxième groupe G₂ affecté à cette deuxième mission sont tous équipés d'une caméra dont seul le faisceau de visée, pointant vers le fond, a été représenté, et évoluent selon leur motif attribué de trajectoires, représentées par des flèches en traits interrompus. Les trajectoires de ce motif projetées selon le plan (x, y) ne sont cependant pas forcément parallèles entre elles puisqu'elles ont été calculées et optimisées en fonction de la localisation des sous-zones d'intérêts identifiées grâce à la première mission. En outre, du fait du type de données à acquérir pour cette deuxième mission, ici des images, on va également prévoir avantageusement que les véhicules motorisés subaquatiques 1₂, 2₂ et 3₂ évoluent à une altitude sensiblement constante par rapport au fond F, et donc suivent une trajectoire dans laquelle la position selon l'axe z de chaque véhicule est variable. On peut par exemple régler l'altitude des véhicules utilisés en fonction du degré de turbidité de l'eau à mesurer par ailleurs, par exemple à quatre mètres au-dessus du fond si l'eau est claire, et entre un et deux mètres sinon. Ainsi, on voit dans l'exemple qui vient d'être décrit, que le second motif de trajectoires est défini en fonction des mesures effectuées par les sonars de la première mission.

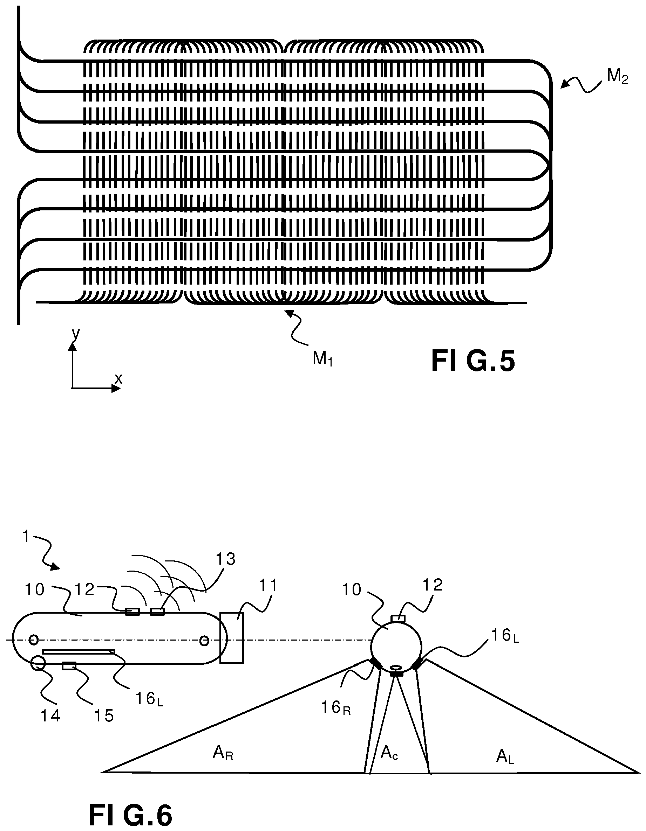

La figure 5 illustre schématiquement un autre exemple de motifs de trajectoires susceptibles d'être utilisés dans deux missions menées successivement. Dans cet exemple, le premier motif M₁ est à suivre par un premier groupe de seize véhicules subaquatiques équipés de sonars de classification d'habitat, et le deuxième motif M₂ est à suivre par un deuxième groupe de quatre véhicules subaquatiques équipés de caméras. Par rapport à l'exemple précédent, on constate que les trajectoires du premier motif M₁ de trajectoires sont globalement transverses (ici perpendiculaires) dans le plan (x, y) aux trajectoires du deuxième motif M₂ de trajectoires.

D'autres types de missions globales d'acquisition de données utilisant le principe d'au moins deux missions menées successivement peuvent être envisagés. Cette stratégie en deux temps est particulièrement bien adaptée à la surveillance de zones à évolution lente, typiquement la surveillance de l'évolution de l'habitat, et plus généralement pour tous les cas où le type de mesures faites lors de la première mission ont une durée de validité suffisamment importante.

Un intérêt de cette stratégie en au moins deux temps est, entre autres, de pouvoir utiliser un nombre réduit d'équipements, par exemple en utilisant les mêmes équipements 4 de surface pour chacune des missions successives, et/ou en utilisant des véhicules motorisés subaquatiques communs aux différentes missions successives.

A titre d'exemple, la figure 6 représente schématiquement, en vues de côté et de face, un véhicule autonome 1 susceptible d'être utilisé pour chacune des deux missions des figures 4(a) et 4(b). Ce véhicule 1 comporte tous les éléments déjà décrits ci-avant en référence à la figure 3. Le véhicule 1 est doté de plus d'un sonar central 15 pour la classification de l'habitat, avec sa zone de couverture A_{C}, et de deux sonars 16_{L} et 16_{R} à balayage latéral, avec leurs zones de couverture respectives A_{L} et A_{R}. Pour la première mission définie en relation avec la figure 4(a), seuls les sonars 15, 16_{L} et 16_{R} seront activés. La caméra 14 ne sera utilisée qu'au cours de la deuxième mission.

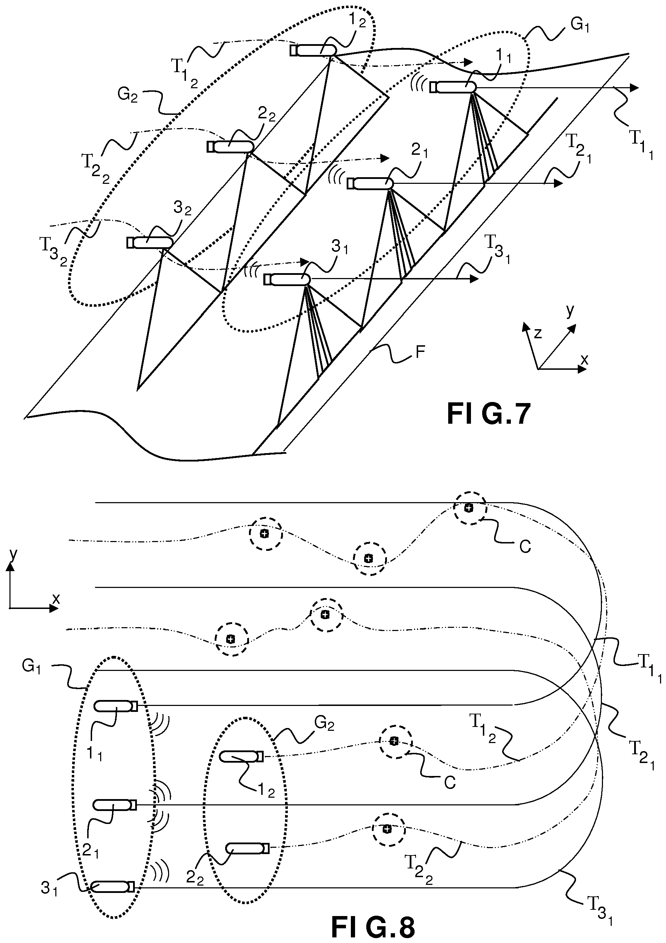

La figure 7 illustre un exemple de mission globale d'acquisition de données d'observation dans lequel une première mission et une deuxième mission sont menées de façon concomitante, trois véhicules subaquatiques 1₁, 2₁ et 3₁ d'un premier groupe G₁ d'une part, et trois véhicules subaquatiques 1₂, 2₂ et 3₂ formant un deuxième groupe G₂ évoluant simultanément sous l'eau pour effectuer leur mission respective. Les trajectoires du premier motif sont représentées par des flèches en trait plein alors que les trajectoires du deuxième motif sont représentées en trait interrompu. Ainsi, les trois véhicules subaquatiques 1₁, 2₁ et 3₁ suivent leur trajectoire respective T_{1₁},

T_{2₁} et T_{3₁}, et les trois véhicules subaquatiques 1₂, 2₂ et 3₂ suivent leur trajectoire respective T_{1₂}, T_{2₂} et T_{3₂}. La mission globale est ici, de façon non limitative, identique à celle déjà décrite en référence aux figures 4(a) et 4(b), avec une acquisition de données sonar provenant d'un sonar central de classification d'habitats et de deux sonars à balayage latérale équipant les véhicules du premier groupe G₁, et l'acquisition d'images provenant d'une caméra équipant les véhicules du deuxième groupe G₂. A la différence de la mission décrite en référence 4(a) et 4(b) cependant, les trajectoires T_{1₂}, T_{2₂} et T_{3₂} du deuxième motif sont ici adaptées en temps réel en fonction de données acquises par les véhicules du premier groupe. Ces données, ou la modification de trajectoires peuvent être transmises directement sous l'eau entre au moins un véhicule du premier groupe et au moins un véhicule du deuxième groupe (cas où les deux groupes sont des meutes de véhicules comprenant un véhicule maître), ou entre véhicules appariés dans chacun des groupes. En variante, ces données, ou la modification de trajectoires peuvent être transmises indirectement entre les véhicules des deux groupes, en utilisant par exemple l'équipement 4 de surface. En variante, l'ajustement de trajectoires T_{1₂}, T_{2₂} et T_{3₂} pour des véhicules du deuxième groupe G₂ peut résulter d'une combinaison de données provenant directement de véhicules du premier groupe G₁ et de l'équipement 4 de surface.

La figure 8 illustre schématiquement, en vue de dessus les motifs de trajectoires suivis dans le cadre d'un autre exemple de mission d'acquisition de données d'analyse comportant une première mission et une deuxième mission menées simultanément. On suppose ici que trois véhicules subaquatiques 1₁, 2₁ et 3₁ d'un premier groupe G₁ effectuent des mesures magnétométriques pour la détection d'objets ferreux et l'identification de sous-zones d'intérêt dans lesquelles de tels objets sont détectés, et que deux véhicules subaquatiques 1₂ et 2₂ d'un deuxième groupe G₂ capturent des images au niveau de ces zones d'intérêts pour permettre d'identifier la nature de ces objets. Comme précédemment, les trajectoires T_{1₁}, T_{2₁} et T_{3₁} du premier motif pour le premier groupe G₁ sont représentées par des flèches en trait plein alors que les trajectoires T_{1₂} et T_{2₂} du deuxième motif pour le deuxième groupe G₂ sont représentées en trait interrompu. Les véhicules du premier groupe G₁ agissent en éclaireurs en permettant d'identifier sept zones d'intérêt représentées par des cercles C, et les trajectoires des véhicules du deuxième groupe G₂ sont adaptées en temps réel ou quasi réel pour passer sur ces zones d'intérêt et capturer des images. Ici encore, la transmission des données ou des ordres s'effectuent soit de façon directe sous l'eau entre des véhicules des deux groupes, soit de façon indirecte, via par exemple un équipement de surface.

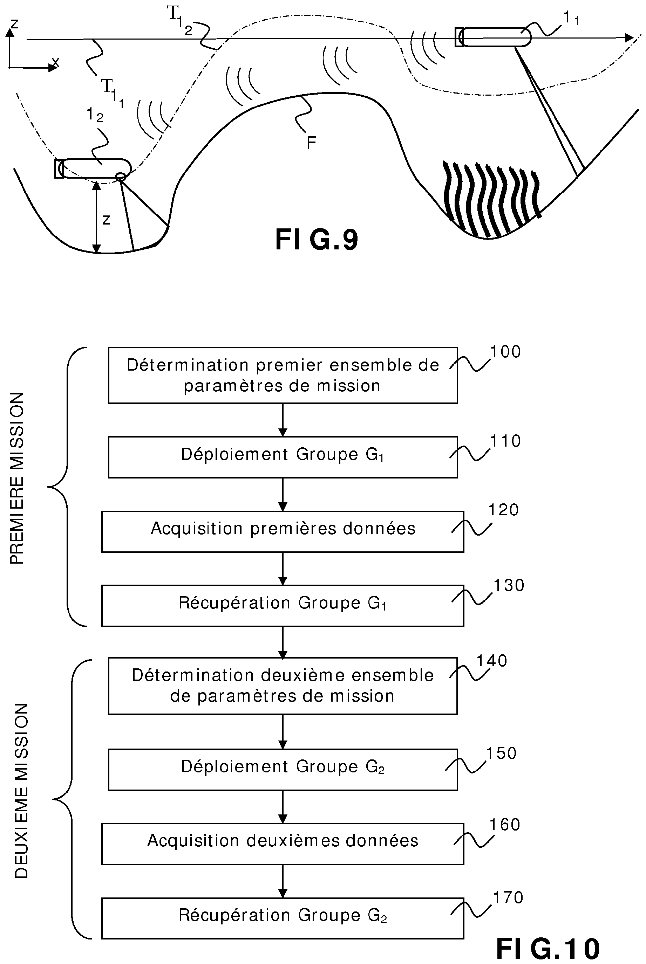

La figure 9 illustre encore un autre exemple d'adaptation en temps réel ou quasi réel de la trajectoire T_{1₂} d'un véhicule 1₂ d'un deuxième groupe en fonction de données acquises par un véhicule 1₁ d'un premier groupe. Dans cet exemple, le véhicule 1₁ suit sa trajectoire T_{1₁} et effectue des mesures de bathymétrie permettant de connaître la profondeur à laquelle se situe le fond F, et le véhicule 2₂ capture des images du fond F en se déplaçant à altitude z sensiblement constante par rapport au fond F comme le montre schématiquement sa trajectoire illustrée en trait interrompu.

Les exemples décrits jusqu'ici ont montré principalement comment des données d'analyse acquises lors d'une première mission pouvaient influer sur les trajectoires affectées aux véhicules d'une deuxième mission.

Le second motif de trajectoire n'est néanmoins pas le seul paramètre de mission qui peut être dépendant de données acquises au cours d'une première mission. Au contraire, le procédé d'acquisition selon l'invention offre de multiples possibilités en fonction du domaine d'application.

A titre d'exemple, une mission globale d'observation d'une zone aquatique pourrait consister à mesurer, au cours d'une première mission, la bathymétrie et la transmissibilité optique, et à capturer des images au cours de la deuxième mission, en réglant non seulement l'altitude des véhicules de la deuxième mission par rapport au fond, mais aussi la puissance et/ou le type d'éclairage associé aux caméras utilisées dans la deuxième mission.

Un autre exemple de mission globale pourrait consister à scanner un fond marin au cours d'une première mission à l'aide de magnétomètres en vue de détecter la présence d'objets métalliques, et de déclencher des sondeurs multifaisceaux sur tout ou partie des véhicules associés à la deuxième mission seulement là où des objets ont été détectés. L'intérêt ici est d'augmenter autant que possible l'autonomie des véhicules subaquatiques en ne réalisant la deuxième série d'acquisition que dans la mesure où elle est nécessaire.

Un autre exemple de mission globale pourrait consister à utiliser les véhicules du premier groupe pour détecter la présence d'hydrocarbures, puis d'utiliser un ou plusieurs véhicules du deuxième groupe pour se rendre au lieu de la détection et prélever un échantillon.

En d'autres termes, n'importe lequel des paramètres associés à la deuxième mission, qu'il s'agisse des motifs de trajectoires, de trajectoires particulières dans le motif, du type de données à acquérir, ou de paramètres liés au fonctionnement des capteurs (tels que la focale d'une caméra, un seuil de détection, une puissance d'émission, un état activé ou non...) peut être déterminé ou modifié en temps réel ou quasi-réel en fonction de données acquises au cours de la première mission.

Un exemple d'étapes susceptibles d'être mises en œuvre pour un procédé d'acquisition de données d'analyse conforme à l'invention, comportant deux missions successives est à présent décrit en référence à la figure 10 :
Le premier ensemble de paramètres associés à la première mission est tout d'abord déterminé lors d'une étape 100. Les véhicules subaquatiques du premier groupe G₁ assigné à cette première mission sont alors déployés (étape 110) et évoluent dans la zone d'observation pour effectuer leur mission, en l'occurrence pour acquérir des premières données (étape 120). Les véhicules du premier groupe G₁ sont alors récupérés (étape 130) par tout moyen. L'analyse des premières données permet de déterminer le deuxième ensemble de paramètres associés à la deuxième mission, lors d'une étape 140, conformément au principe qu'au moins un des paramètres de mission du deuxième ensemble est fonction d'au moins une des premières données d'analyse acquise au cours de la première mission. Les véhicules subaquatiques du deuxième groupe G₂ assigné à cette deuxième mission sont alors déployés (étape 150) et évoluent dans la zone d'observation pour effectuer leur mission, en l'occurrence pour acquérir des deuxièmes données (étape 160). Les véhicules du deuxième groupe G₂ peuvent alors être récupérés par tout moyen (étape 170).

A noter que, dans l'application particulière de la surveillance de l'évolution de l'habitat subaquatique, chacune des premières et deuxièmes missions peuvent durer de quelques heures à plusieurs jours, selon la surface de la zone à surveiller et le nombre de véhicules déployés. En ce qui concerne les surveillances de l'habitat sous-marin, certains pays imposent que la surveillance soit réactualisée périodiquement, par exemple tous les six ans. Dans ce cas précis, la réactualisation consistera avantageusement à refaire de façon périodique seulement la deuxième mission, de façon à cartographier rapidement l'évolution des sous-zones d'intérêt qui avaient été identifiées lors de la première mission.

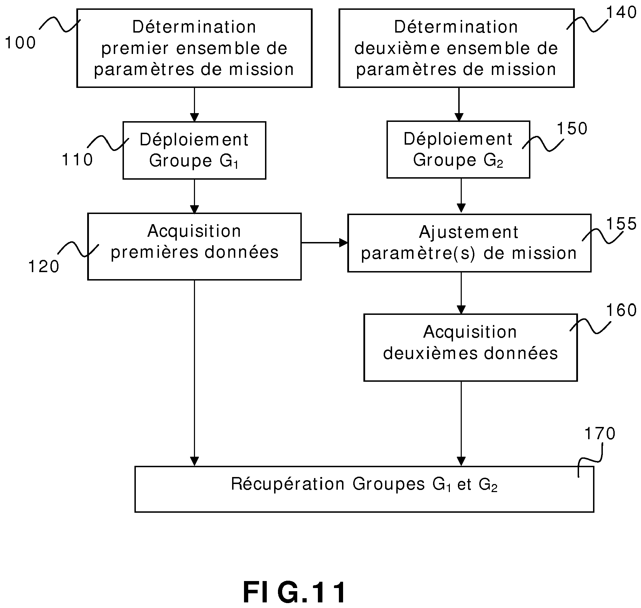

Un exemple d'étapes susceptibles d'être mises en œuvre pour un procédé d'acquisition de données d'analyse conforme à l'invention, comportant deux missions concomitantes est à présent décrit en référence à la figure 11. Les étapes similaires aux étapes décrites dans le cadre de la figure 10 portent les mêmes références et ne seront pas re décrites ici. On constate sur la figure 11 que dans ce cas, les véhicules des groupes G₁ et G₂ sont déployés en même temps ou à tout le moins de manière à pouvoir effectuer leur mission respective de façon concomitante. La principale différence réside dans le fait que le deuxième ensemble de paramètres de mission est globalement prédéterminé lors d'une étape 140, mais qu'il est modifié lors d'une étape 155 consistant à ajuster ou modifier si nécessaire au moins l'un des paramètres de la deuxième mission en fonction de données acquises au cours de l'étape 120. Les véhicules des deux groupes peuvent ensuite être récupérés soit de façon indépendante, soit simultanément, comme représenté par l'étape 170.

## Revendications

1. Procédé d'acquisition de données d'analyse dans une zone (A) d'observation d'un environnement subaquatique, ledit procédé comprenant :
- le déploiement (100), pour une première mission d'acquisition de premières données d'analyse, d'un premier groupe (G₁) de véhicules motorisés subaquatiques (1₁, 2₁, 3₁) aptes à évoluer de façon coordonnée dans ladite zone (A) d'observation selon un premier motif (M₁) de trajectoires à suivre par lesdits véhicules motorisés, chaque véhicule motorisé subaquatique (1₁, 2₁, 3₁) étant équipé d'au moins un capteur (14, 14_{C}, 14_{L}, 14_{R}) dédié à l'acquisition d'un type de données d'analyse, ladite première mission étant définie par un premier ensemble prédéterminé de paramètres de mission comprenant ledit premier motif (M₁) de trajectoires, au moins un type de premières données d'analyse à acquérir, et des paramètres de fonctionnement relatifs aux capteurs du premier groupe aptes à l'acquisition de données correspondant audit au moins un type de premières données d'analyse à acquérir ;
- le déploiement (150), pour une deuxième mission d'acquisition de deuxièmes données d'analyse, d'un deuxième groupe (G₂) de véhicules motorisés subaquatiques (1₂, 2₂, 3₂) aptes à évoluer de façon coordonnée dans ladite zone (A) d'observation selon un deuxième motif (M₂) de trajectoires à suivre par lesdits véhicules motorisés, chaque véhicule motorisé subaquatique (1₂, 2₂, 3₂) étant équipé d'au moins un capteur (14, 14_{C}, 14_{L}, 14_{R}) dédié à l'acquisition d'un type de données d'analyse, ladite deuxième mission étant définie par un deuxième ensemble de paramètres de mission comprenant ledit deuxième motif de trajectoires, au moins un type de deuxièmes données d'analyse à acquérir, et des paramètres de fonctionnement relatifs aux capteurs du deuxième groupe aptes à l'acquisition de données correspondant audit au moins un type de deuxième données d'analyse à acquérir ;
au moins un des paramètres de mission dudit deuxième ensemble étant fonction (140 ; 155) d'au moins une des premières données d'analyse acquise au cours de la première mission,
**caractérisé en ce que** lesdites première et deuxième missions sont réalisées de façon concomitante, ledit au moins un des paramètres de mission dudit deuxième ensemble étant ajusté (155) en temps réel en fonction de ladite au moins une des premières données d'analyse acquise, ledit procédé comportant une étape de transmission directe ou indirecte de données d'au moins un véhicule motorisé subaquatique (1₁, 2₁, 3₁) du premier groupe (G₁) vers au moins un véhicule motorisé subaquatique du deuxième groupe (G₂).

2. Procédé selon la revendication 1, **caractérisé en ce que** l'étape de transmission est indirecte, les données transmises étant relayées par un équipement (4) de surface.

3. Procédé selon l'une quelconque des revendications précédentes, **caractérisé en ce que** ledit au moins un type de premières données d'analyse à acquérir lors de la première mission est différent dudit au moins un type de deuxième données d'analyse à acquérir lors de la deuxième mission.

4. Procédé selon l'une quelconque des revendications précédentes, **caractérisé en ce que** les trajectoires du premier, et/ou respectivement du deuxième, motif de trajectoires sont sensiblement parallèles entre elles.

5. Procédé selon l'une quelconque des revendications précédentes, **caractérisé en ce que** les trajectoires du premier motif (M₁) de trajectoires sont globalement parallèles aux trajectoires du deuxième motif (M₂) de trajectoires.

6. Procédé selon l'une quelconque des revendications 1 à 4, **caractérisé en ce que** les trajectoires du premier motif (M₁) de trajectoires sont globalement transverses aux trajectoires du deuxième motif (M₂) de trajectoires

## Patentansprüche

1. Verfahren zum Erfassen von Analysedaten in einer Beobachtungszone (A) einer Unterwasserumgebung, wobei das Verfahren umfasst:
- den Einsatz (100), für eine erste Mission zur Erfassung erster Analysedaten, einer ersten Gruppe (G₁) motorisierter Unterwasserfahrzeugen (1₁, 2₁, 3₁), die geeignet sind, sich in koordinierter Weise in der Beobachtungszone (A) gemäß einem ersten Muster (M₁) von Trajektorien, denen die motorisierten Fahrzeuge folgen sollen, wobei jedes motorisierte Unterwasserfahrzeug (1₁, 2₁, 3₁) mit mindestens einem Sensor (14, 14_{C}, 14_{L}, 14_{R}) ausgestattet ist, der für die Erfassung eines Typs von Analysedaten gewidmet ist, wobei die erste Mission durch einen ersten vorbestimmten Satz von Missionsparametern definiert ist, die das erste Muster (M₁) von Trajektorien umfassen, mindestens einen Typ von ersten zu erfassenden Analysendaten, und Betriebsparameter bezüglich der Sensoren der ersten Gruppe, die zur Datenerfassung geeignet sind, die dem mindestens einen Typ von ersten zu erfassenden Analysedaten entsprechen;
- den Einsatz (150), für eine zweite Mission zur Erfassung zweiter Analysedaten, einer zweiten Gruppe (G₂) motorisierter Unterwasserfahrzeugen (1₂, 2₂, 3₂), die geeignet sind, sich in koordinierter Weise in der Beobachtungszone (A) gemäß einem zweiten Muster (M₂) von Trajektorien, denen die motorisierten Fahrzeuge folgen sollen, wobei jedes motorisierte Unterwasserfahrzeug (1₂, 2₂, 3₂) mit mindestens einem Sensor (14, 14_{C}, 14_{L}, 14_{R}) ausgestattet ist, die der Erfassung eines Typs von Analysedaten gewidmet ist, wobei die zweite Mission durch einen zweiten vorbestimmten Satz von Missionsparametern definiert ist, die das zweite Muster (M₂) von Trajektorien umfassen, mindestens einen Typ von zweiten zu erfassenden Analysedaten und Betriebsparameter bezüglich der Sensoren der zweiten Gruppe, die zur Datenerfassung geeignet sind, die dem mindestens einen Typ von zweiten zu erfassenden Analysedaten entsprechen;
wobei mindestens einer der Missionsparameter des zweiten Satzes ist Funktion (140; 155) von mindestens eines der ersten Analysedaten, das während der ersten Mission erfasst wurde,
**dadurch gekennzeichnet, dass** die erste und die zweite Missionen gleichzeitig durchgeführt werden, wobei mindestens einer der Missionsparameter des zweiten Satzes in Echtzeit in Abhängigkeit von dem mindestens eines der ersten erfassten Analysedaten eingestellt (155) wird, wobei das Verfahren einen Schritt der direkten oder indirekten Übertragung von Daten von mindestens einem motorisierten Unterwasserfahrzeug (1₁, 2₁, 3₁) der ersten Gruppe (G₁) zu mindestens einem motorisierten Unterwasserfahrzeug der zweiten Gruppe (G₂) umfasst.

2. Verfahren nach Anspruch 1, **dadurch gekennzeichnet, dass** der Übertragungsschritt indirekt ist, wobei die übertragenen Daten durch Oberflächengeräte (4) weitergeleitet werden.

3. Verfahren nach einem vorhergehenden Ansprüche, **dadurch gekennzeichnet, dass** sich der mindestens einen Typ von ersten zu erfassenden Analysedaten während der ersten Mission von dem mindestens einen Typ von zweiten zu erfassenden Analysedaten während der zweiten Mission unterscheidet.

4. Verfahren nach einem vorhergehenden Ansprüche, **dadurch gekennzeichnet, dass** die Trajektorien des ersten, und/oder respektive des zweiten, Trajektorienmusters im Wesentlichen parallel zueinander sind.

5. Verfahren nach einem vorhergehenden Ansprüche, **dadurch gekennzeichnet, dass** die Trajektorien des ersten Musters (M₁) von Trajektorien im Allgemeinen parallel zu den Trajektorien des zweiten Musters (M₂) von Trajektorien sind.

6. Verfahren nach einem der Ansprüche 1 bis 4, **dadurch gekennzeichnet, dass** die Trajektorien des ersten Musters (M₁) von Trajektorien im Allgemeinen quer zu den Trajektorien des zweiten Musters (M₂) von Trajektorien sind.

## Claims

1. Method for acquiring analysis data in an observation zone (A) of an underwater environment, said method comprising:
- deploying (100), for a first mission to acquire first analysis data, of a first group (G₁) of underwater motorized vehicles (1₁, 2₁, 3₁) capable of moving in a coordinated manner in said observation zone (A) according to a first pattern (M₁) of trajectories to be followed by said motorized vehicles, each underwater motorized vehicle (1₁, 2₁, 3₁) being equipped with at least one sensor (14, 14_{C}, 14_{L}, 14_{R}) dedicated to the acquisition of a type of analysis data, said first mission being defined by a first predetermined set of mission parameters comprising said first pattern (M₁) of trajectories, at least one type of first analysis data to be acquired, and operating parameters relating to the sensors of the first group capable of acquiring data corresponding to said at least one type of first analysis data to be acquired;
- deploying (150), for a second mission to acquire second analysis data, of a second group (G₂) of underwater motorized vehicles (1₂, 2₂, 3₂) capable of operating in a coordinated manner in said observation zone (A) according to a second pattern (M₂) of trajectories to be followed by said motorized vehicles, each underwater motorized vehicle (1₂, 2₂, 3₂) being equipped with at least one sensor (14, 14_{C}, 14_{L}, 14_{R}) dedicated to the acquisition of a type of analysis data, said second mission being defined by a second set of mission parameters comprising said second pattern of trajectories, at least one type of second analysis data to be acquired, and operating parameters relating to the sensors of the second group capable of acquiring data corresponding to said at least one type of second analysis data to be acquired;
at least one of the mission parameters of said second set being function (140; 155) of at least one of the first analysis data acquired during the first mission,
**characterized in that** said first and second missions are carried out concomitantly, said at least one of the mission parameters of said second set being adjusted (155) in real time as a function of said at least one of the first acquired analysis data, said method comprising a step of direct or indirect transmission of data from at least one underwater motorized vehicle (1₁, 2₁, 3₁) of the first group (G₁) to at least one underwater motorized vehicle of the second group (G₂).

2. Method according to claim 1, **characterized in that** said step of transmission of data is indirect, transmitted data being relayed by surface equipment (4).

3. Method according to one of the preceding claims, **characterized in that** said at least one type of first analysis data to be acquired during the first mission is different from said at least one type of second analysis data to be acquired during the second mission.

4. Method according to one of the preceding claims, **characterized in that** the trajectories of the first, and/or respectively the second, pattern of trajectories are substantially parallel to each other.

5. Method according to one of the preceding claims, **characterized in that** the trajectories of the first pattern (M1) of trajectories are generally parallel to the trajectories of the second pattern (M2) of trajectories.

6. Method according to one of the claims 1 to 4, **characterized in that** the trajectories of the first pattern (M1) of trajectories are generally transverse to the trajectories of the second pattern (M2) of trajectories.
